# EUROPÄISCHE PATENTSCHRIFT

(11) **EP 3 922 542 B1**
(45) Veröffentlichungstag und Bekanntmachung des Hinweises auf die Patenterteilung: **01.05.2024**
(21) Anmeldenummer: 21177254.6
(22) Anmeldetag: 01.06.2021
(51) Int. Cl.: B62K 11/10, B62K 25/28, B62M 7/12

(54) **FAHRZEUG MIT ELEKTROMOTOR IN DER HINTERRADSCHWINGE**
VEHICLE WITH ELECTRIC MOTOR IN REAR-WHEEL SWING ARM
VÉHICULE AVEC MOTEUR ÉLECTRIQUE DANS LE BRAS OSCILLANT DE ROUE ARRIÈRE

(30) Priorität: 10.06.2020 DE 102020115400
(43) Veröffentlichungstag der Anmeldung: 15.12.2021
(73) Patentinhaber: Lang Technik GmbH, 73271 Holzmaden (DE)
(72) Erfinder: Lang, Günter, 72349 Wernau (DE)
(74) Vertreter: Rüger Abel Patentanwälte PartGmbB

(56) Entgegenhaltungen:
- EP-A1- 1 389 579
- EP-A1- 2 527 237
- WO-A1-2019/211947
- CN-A- 106 064 658
- CN-U- 203 111 401
- US-A1- 2013 153 323
- US-B2- 7 249 644

## Beschreibung

Die Erfindung betrifft ein einspuriges Fahrzeug mit einem Hinterrad und wenigstens einem Vorderrad. Vorzugsweise handelt es sich um ein Zweirad mit genau einem Vorderrad. Das Fahrzeug kann beispielsweise ein Fahrrad, Motorrad oder Motorroller sein. Das Fahrzeug wird durch einen Elektromotor angetrieben, der entweder als Hilfsantrieb die Muskelkraft des Fahrers unterstützt oder das Fahrzeug als alleiniger Hauptantrieb ohne Muskelkraft des Fahrers antreibt.

Die Bayerische Motorenwerke AG bietet unter der Typbezeichnung "C Evolution" oder "C Evolution LR" einen Elektro-Motorroller an. Die Hinterradschwinge ist als Triebsatzschwinge ausgestaltet, an der der Elektromotor angeordnet ist.

Aus gattungsgemäßen EP 2 527 237 A1 ist ein Elektroroller mit einer Hinterradschwinge bekannt. Der Elektromotor sowie die Motorsteuereinheit können in der Hinterradschwinge angeordnet sein. Ein elektrisch angetriebenes Zweirad ist auch aus US 7 249 644 B2 bekannt, das eine Antriebseinheit offenbart aufweisend einen Elektromotor zum Antreiben des Hinterrades sowie ein Steuermodul zur Steuerung des Elektromotors. Die Antriebseinheit ist an der Hinterradschwinge angeordnet. In WO 2019/211947 A1 wird ein Elektroroller mit einer Hinterradschwinge beschrieben. Der Motor ist am Hinterrad angeordnet. Eine Motorsteuereinheit (PCU ist an der Rückseite des Fahrzeugrahmens hinter der Batterie und oberhalb der Hinterradschwinge angeordnet.

Ein elektrisch angetriebenes Zweirad geht außerdem aus US 2013/0153323 A1 hervor. EP 1 389 579 A1, CN 106 064 658 A und CN 203 111 401 U beschreiben jeweils eine Hinterradschwinge für ein Zweirad.

Die Aufgabe der vorliegenden Erfindung ist es, ein einspuriges Fahrzeug mit einem elektromotorischen Antrieb oder Hilfsantrieb zu schaffen, wobei ein konstruktiv einfacher Aufbau mit optimierter Kühlung des Elektromotors erreicht werden soll.

Diese Aufgabe wird durch ein Fahrzeug mit den Merkmalen des Patentanspruches 1 gelöst.

Das Fahrzeug weist ein antreibbares Hinterrad und wenigstens ein Vorderrad auf. Bevorzugt ist ein einziges Vorderrad vorhanden. Das Fahrzeug ist ein bei Kurvenfahrt neigbares einspuriges Fahrzeug. Es weist insbesondere genau ein Vorderrad auf.

Das Fahrzeug hat außerdem einen Rahmen, an dem das Hinterrad und das wenigstens eine Vorderrad gelagert sind. Der Rahmen hat eine Hinterradschwinge. Die Hinterradschwinge ist ein- oder zweiarmig ausgeführt. Das Hinterrad ist an der Hinterradschwinge gelagert. In einer Querrichtung rechtwinklig zur Fahrtrichtung des Fahrzeugs ist neben dem einen Arm oder zwischen den beiden Armen ein Einbauraum vorhanden.

Das Fahrzeug hat außerdem einen Elektromotor, der mit dem Hinterrad antriebsgekoppelt ist, beispielsweise mittels einer Kette, eines Riemens oder eines anderen flexiblen Kopplungselements. Der Elektromotor ist im Einbauraum angeordnet. Im Einbauraum ist außerdem eine Motorsteuereinheit angeordnet, die zur Steuerung des Elektromotors eingerichtet ist. Durch die räumliche Nähe zwischen der Motorsteuereinheit und dem Elektromotor kann der Verkabelungsaufwand zwischen der Motorsteuereinheit und dem Elektromotor reduziert werden. Die Kabelverlegung wird vereinfacht. Die elektrischen Verluste werden durch kurze elektrische Leitungen bzw. Kabel reduziert, was sich positiv auf die Reichweite auswirken kann. Außerdem sind die Motorsteuereinheit, der Elektromotor und die elektrischen Verbindungen im Einbauraum zu Wartungs- und Reparaturzwecken einfach zugänglich.

Der Elektromotor und die Motorsteuereinheit sind somit relativ zu dem wenigstens einen Arm der Hinterradschwinge unbeweglich angeordnet und mit einem Arm oder mit beiden Armen der Hinterradschwinge verbunden. Daher ist der Weg zwischen dem Elektromotor und der Nabe des Hinterrades sehr kurz, was die Antriebskopplung vereinfacht. Außerdem können Spannmittel zum Spannen eines flexiblen Kopplungselements entfallen. Der Elektromotor kann im Einbauraum gut gekühlt werden, wobei vorzugsweise zumindest ein Arm der Hinterradschwinge als Kühlkörper dienen kann.

Bevorzugt ist der Einbauraum in Querrichtung durch den wenigstens einen Arm abgeschlossen bzw. abgedeckt. Wenn nur ein Arm vorhanden ist, ist der Einbauraum auf der dem Arm entgegengesetzten Seite durch eine Abdeckung abgeschlossen. Der Elektromotor kann besser vor äußeren Einwirkungen und Beschädigungen geschützt werden. Die Kühlung wird insbesondere über einen oder beide Arme bewirkt.

Bei einem bevorzugten Ausführungsbeispiel bildet der wenigstens eine Arm eine Abdeckung, die zumindest benachbart zum Einbauraum durchbrechungslos ausgebildet ist. Bei einem Ausführungsbeispiel ist der wenigstens eine Arm lediglich im Bereich eines vorderen Schwenklagers und eines hinteren Radlagers mit jeweils einem Loch versehen und ansonsten durchbrechungslos.

Das Fahrzeug kann ohne Tretkurbel ausgeführt sein. Bei dieser Ausführungsform dient der Elektromotor als einzige Antriebsquelle. Bei einer abgewandelten Ausführungsform kann zusätzlich eine Tretkurbel am Rahmen vorhanden sein.

Die Hinterradschwinge ist bei einem Ausführungsbeispiel mittels eines Schwenklagers und insbesondere eines einzigen Schwenklagers schwenkbar an einem vorderen Rahmenteil des Rahmens gelagert. Das Schwenklager definiert genau eine sich in Querrichtung erstreckende Schwenkachse zwischen der Hinterradschwinge und dem vorderen Rahmenteil. Die schwenkbare Verbindung zwischen der Hinterradschwinge und dem vorderen Rahmenteil ist auf diese Weise sehr einfach gestaltet. Komplexe Schwenkanordnungen mit mehreren Hebeln oder Lenkern können entfallen.

Der Einbauraum befindet sich bezogen auf die Fahrtrichtung vorzugsweise vor dem Hinterrad und hinter dem Schwenklager. Bei dieser Ausgestaltung kann der Elektromotor nahe an der durch das Schwenklager definierten Schwenkachse angeordnet sein, was sich vorteilhaft auf die Federung und/oder Dämpfung der Hinterradschwinge auswirkt.

Bevorzugt ist der Elektromotor über eine wärmeleitende Verbindung mit einem Arm oder beiden Armen der Hinterradschwinge verbunden.

Die Motorsteuereinheit kann über eine wärmeleitende Verbindung mit wenigstens einem Arm oder beiden Armen der Hinterradschwinge verbunden sein.

Es ist besonders vorteilhaft, wenn die Motorsteuereinheit dem Elektromotor in Querrichtung gegenüberliegend im Einbauraum angeordnet ist. Dadurch kann der Einbauraum in Querrichtung ausgenutzt werden und die Länge der Hinterradschwinge in Fahrtrichtung möglichst kurz sein.

Bevorzugt ist der Einbauraum an einer Rückseite mit Bezug zur Fahrtrichtung durch eine Rückwand begrenzt bzw. zumindest teilweise abgeschlossen. Die Rückwand trennt den Einbauraum von einem Zwischenraum zwischen den Armen zur Aufnahme eines Abschnitts des Hinterrades.

Der Einbauraum ist an einer Oberseite durch einen Deckel abgedeckt. Der Deckel ist beispielsweise an dem wenigstens einen Arm befestigt. Der Deckel weist außerdem ein Lagerteil zum Befestigen einer Feder-Dämpfer-Einheit für die Hinterradschwinge auf.

Ein Arm oder beide Arme der Hinterradschwinge ist bzw. sind bevorzugt aus einem Metall enthaltenden Material und können aus Metall oder einer metallischen Legierung bestehen. Ein Arm oder beide Arme der Hinterradschwinge können beispielsweise aus Aluminium oder einer Aluminiumlegierung bestehen.

Bei einem Ausführungsbeispiel dient ein Riemengetriebe zur Antriebskopplung zwischen dem Elektromotor und dem Hinterrad, wobei drehfest mit dem Hinterrad eine Riemenscheibe angeordnet sein kann. Eine Riemenauflagefläche der Riemenscheibe kann einen Aufnahmeraum für eine Bremsscheibe bzw. eine Hinterradbremse aufweisen. Die beim Bremsen entstehende Wärme an der Bremsscheibe kann über die größere Riemenscheibe schnell an die Umgebung abgeleitet werden.

Vorteilhafte Ausgestaltungen des Fahrzeugs sind in den abhängigen Patentansprüchen, der Beschreibung und den Zeichnungen offenbart. Nachfolgend werden bevorzugte Ausführungsbeispiele des Fahrzeugs anhand der beigefügten Zeichnungen im Einzelnen erläutert. Die Zeichnungen zeigen:
Figur 1 eine Seitenansicht eines Ausführungsbeispiels eines Fahrzeugs in Form eines Zweirads,
Figur 2 eine perspektivische Darstellung von vorne oben auf die Hinterradschwinge des Fahrzeugs aus Figur 1 ohne eingebautes Hinterrad,
Figur 3 eine perspektivische Darstellung der Hinterradschwinge aus Figur 2 von vorne unten,
Figur 4 eine perspektivische Ansicht der Hinterradschwinge gemäß der Figuren 2 und 3 in einer Ansicht schräg von oben hinten, wobei ein Deckel der Hinterradschwinge entfernt wurde,
Figur 5 die Hinterradschwinge gemäß der Figuren 2-4 in einer Seitenansicht von links mit eingebautem Hinterrad,
Figur 6 die Hinterradschwinge gemäß der Figuren 2-5 in einer Seitenansicht von rechts ohne eingebautes Hinterrad und
Figur 7 ein Ausführungsbeispiel der Hinterradschwinge mit einem einzigen Arm in perspektivischer Darstellung.

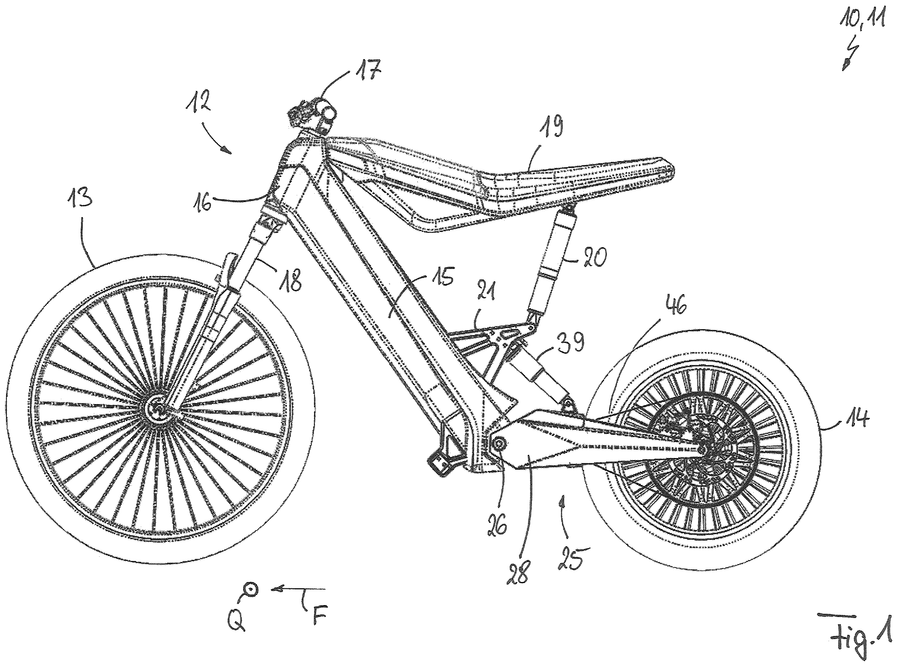

Figur 1 zeigt ein Ausführungsbeispiel eines Fahrzeugs 10, das als Zweirad 11 ausgeführt ist. Das Fahrzeug 10 hat einen Rahmen 12, an dem ein Vorderrad 13 und ein Hinterrad 14 gelagert sind. Bei dem Fahrzeug 10 bzw. dem Zweirad 11 handelt es sich beispielsgemäß um ein einspuriges Fahrzeug, bei dem das Hinterrad 14 in einer Fahrtrichtung F fluchtend hinter dem Vorderrad 13 angeordnet ist.

In Abwandlung zum dargestellten Ausführungsbeispiel könnte das Fahrzeug 10 auch zwei Vorderräder 13 aufweisen, die in einer Querrichtung Q rechtwinklig zur Fahrtrichtung F nebeneinander angeordnet sind. Das Hinterrad 14 kann dann in Querrichtung Q betrachtet mittig zwischen den Vorderrädern 13 angeordnet sein.

Vorzugsweise handelt es sich bei allen Ausführungsformen des Fahrzeugs 10 um ein Fahrzeug, bei dem sich der Rahmen 12 bei einer Kurvenfahrt zur Kurvenmitte hin neigt.

Der Rahmen 12 weist ein vorderes Rahmenteil 15 auf. Das vordere Rahmenteil 15 hat an seinem vorderen Ende ein Steuerrohr 16 für einen Lenker 17. Der Lenker 17 weist ein sich durch das Steuerrohr 16 des vorderen Rahmenteils 15 erstreckendes Lenkerteil auf, das unterhalb des Steuerrohrs 16 mit einer Federgabel 18 verbunden ist. Das Lenkerteil kann ein Rohr sein. An der Federgabel 18 ist das Vorderrad 13 gelagert.

Das vordere Rahmenteil 15 erstreckt sich ausgehend vom Steuerrohr 16 entgegen der Fahrtrichtung F schräg nach unten zu einem hinteren Ende.

An dem vorderen Rahmenteil 15 ist außerdem ein Sitz 19 angeordnet. Der Sitz 19 kann höhenverstellbar am vorderen Rahmenteil 15 angeordnet sein. Eine Stütze 20 stützt den Sitz 19 an einem Rahmenelement 21 ab. Das Rahmenelement 21 ragt entgegen der Fahrtrichtung F schräg vom vorderen Rahmenteil 15 weg.

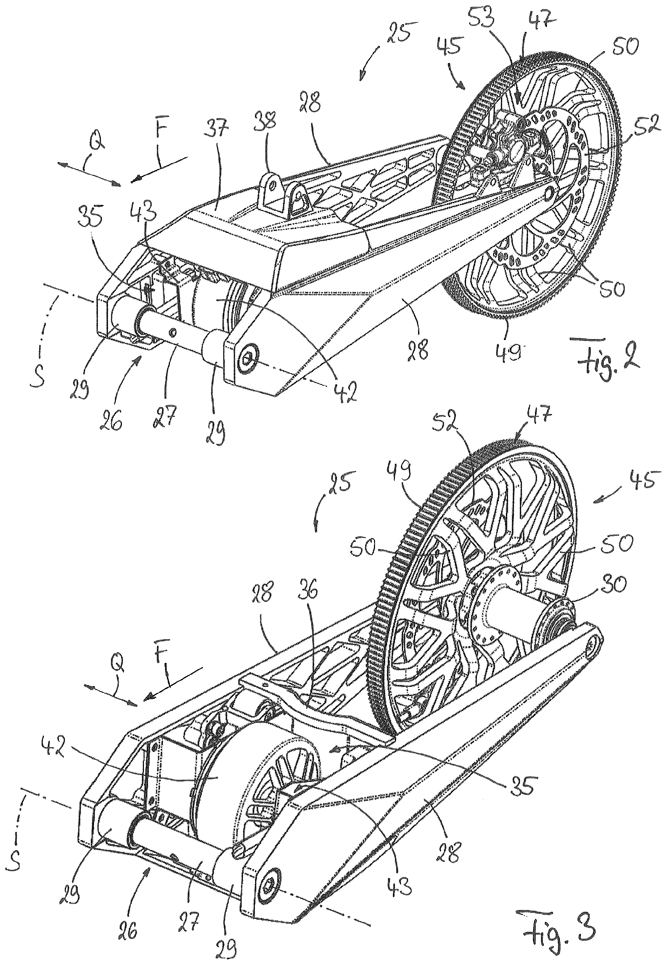

Der Rahmen 12 weist außerdem eine Hinterradschwinge 25 auf. Die Hinterradschwinge 25 erstreckt sich entgegen der Fahrtrichtung F vom vorderen Rahmenteil 15 bis zu einem hinteren Ende mit einer Aufnahme für das Hinterrad 14. Die Hinterradschwinge 25 ist mit dem in Fahrtrichtung F vorderen Ende mittels eines Schwenklagers 26 um eine sich in Querrichtung Q erstreckende Schwenkachse S schwenkbar am vorderen Rahmenteil 15 gelagert. Beim Ausführungsbeispiel ist lediglich ein einziges Schwenklager 26 vorhanden. Das Schwenklager 26 hat beispielsgemäß einen sich in Querrichtung Q erstreckenden Schwenkzapfen 27. Der Schwenkzapfen 27 definiert die Schwenkachse S. Ausführungsbeispiele der Hinterradschwinge sind insbesondere in den Figuren 2 bis 4 zu erkennen.

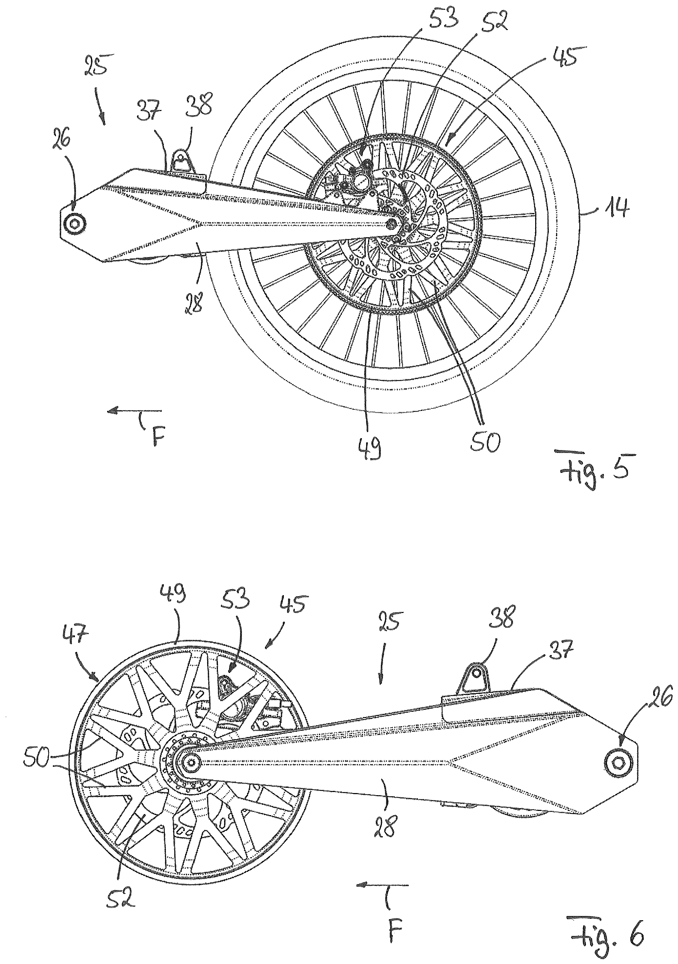

Die Hinterradschwinge 25 weist bei einem Ausführungsbeispiel gemäß der Figuren 1 bis 6 zwei sich parallel zueinander erstreckende Arme 28 auf. Die Arme 28 weisen mit Blickrichtung in Querrichtung Q dieselbe Außenkontur auf. Die Arme 28 haben an dem in Fahrtrichtung F vorderen Ende jeweils ein Loch zur Befestigung des Schwenklagers 26. Beim Ausführungsbeispiel kann der Schwenkzapfen 27 durch die Löcher der Arme 28 hindurch geführt und befestigt werden. Am Schwenkzapfen 27 ist eine Wälzlageranordnung mit wenigstens einem und beispielsgemäß zwei Wälzlagern 29 angeordnet. Mittels der Wälzlager 29 kann das vordere Rahmenteil 15 schwenkbar an der Hinterradschwinge 25 gelagert werden. Dabei kann eine drehbare Außenhülse der Wälzlager 29 drehfest mit dem vorderen Rahmenteil 15 verbunden werden. In diesem Fall ist der Schwenkzapfen 27 drehfest mit der Hinterradschwinge 25 verbunden. Alternativ dazu kann der Schwenkzapfen 27 auch drehfest mit dem vorderen Rahmenteil 15 und die Außenhülse der Wälzlager 29 drehfest mit den Armen 28 der Hinterradschwinge 25 verbunden sein.

An dem dem Schwenklager 26 entgegengesetzten hinteren Ende haben die Arme 28 jeweils ein Loch, um die Radnabe 30 des Hinterrades 14 zu lagern.

Die Arme 28 sind im Wesentlichen durchbrechungsfrei ausgeführt. Sie können plattenförmig ausgestaltet sein. Beispielsgemäß weisen die Arme 28 lediglich zwei Löcher zur Aufnahme des Schwenklagers 27 und zur Aufnahme der Radnabe 30 auf. Weitere Durchbrechungen sind vorzugsweise nicht vorhanden.

Beim Ausführungsbeispiel haben die Arme 28 eine plattförmige Gestalt. Sie können polygonal ausgeführt sein. Ausgehend vom Schwenklager 26 erweitern sich die Arme 28 entgegen der Fahrtrichtung F zunächst bis in den Bereich eines Einbauraums 35, der zwischen den beiden Armen 28 der Hinterradschwinge 25 begrenzt ist. Die Arme 28 verjüngen sich im weiteren Verlauf vom Bereich des Einbauraums 35 entgegen der Fahrtrichtung F zur Nabe 30 des Hinterrades 14.

In Querrichtung Q wird die Breite des Einbauraums 35 durch den Abstand der beiden Arme 28 definiert. Entgegen der Fahrtrichtung F erstreckt sich der Einbauraum 35 bis zu einer Rückwand 36. Die Rückwand 36 erstreckt sich in Querrichtung Q zwischen den beiden Armen 28 und deckt den Einbauraum 35 zum Hinterrad 14 ab. Mit Bezug zur Fahrtrichtung F befindet sich der Einbauraum 35 hinter dem Schwenklager 26.

Wie es in Figur 2 zu erkennen ist, wird der Einbauraum 35 an der Oberseite durch einen Deckel 37 abgedeckt. Der Deckel 37 ist mit den beiden Armen 28 verbunden und erstreckt sich in Querrichtung Q vollständig über den Einbauraum 35 und entgegen der Fahrtrichtung F bis zur oder bis über die Rückwand 36. An dem Deckel 37 ist ein Lagerteil 38 für eine Feder-Dämpfer-Einheit 39 angeordnet. Beim Ausführungsbeispiel ist das Lagerteil 38 gabelförmig, so dass ein unteres Ende der Feder-Dämpfer-Einheit 39 in den Innenbereich des gabelförmigen Lagerteils 38 eingreifen und dort schwenkbar angeordnet werden kann. Das Fahrzeug 10 hat beim Ausführungsbeispiel lediglich eine einzige Feder-Dämpfer-Einheit 39 und ist somit als Monofedersystem ausgebildet. Die Feder-Dämpfer-Einheit 39 ist bezüglich einer Längsmittelachse des Fahrzeugs 10 zentral angeordnet und befindet sich in Fahrtrichtung F vor dem Hinterrad 14. Beim Ausführungsbeispiel erstreckt sich die Feder-Dämpfer-Einheit 39 zwischen dem Rahmenelement 21 und dem Lagerteil 38 am Deckel 37 der Hinterradschwinge 25 (Figur 1).

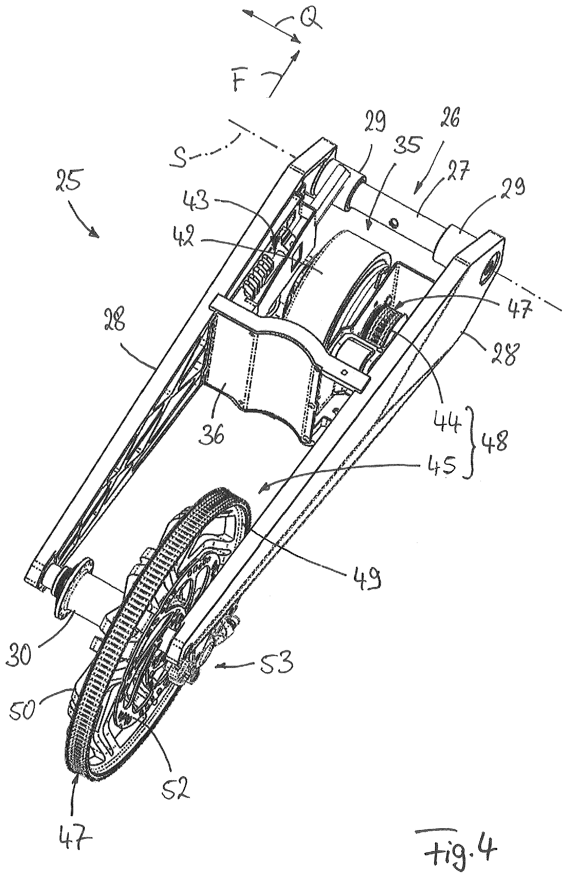

In dem Einbauraum 35 sind ein Elektromotor 42 und eine Motorsteuereinheit 43 angeordnet. Die Motorsteuereinheit 43 ist dazu eingerichtet, den Elektromotor 42 basierend auf empfangenen Steuersignalen eines Fahrers zu steuern oder zu regeln. Der Fahrer kann über ein oder mehrere Bedienelemente einen Befehl zur Erhöhung oder zur Verringerung der Drehzahl des Elektromotors 42 geben. Die Motorsteuereinheit 43 und der Elektromotor 42 sind beim Ausführungsbeispiel in Querrichtung Q gegenüberliegend im Einbauraum 35 angeordnet, was insbesondere in Figur 4 zu erkennen ist. Der Elektromotor 42 ist mechanisch und wärmeleitende mit dem einen Arm 28 und die Motorsteuereinheit 43 ist mechanisch und wärmeleitende mit dem jeweils anderen Arm 28 der Hinterradschwinge 25 verbunden. Die Arme 28 dienen beim Ausführungsbeispiel nicht nur der seitlichen Abdeckung des Einbauraums 35, sondern auch als Träger für den Elektromotor 42 und beim Ausführungsbeispiel zusätzlich für die Motorsteuereinheit 43.

Bei dem hier beschriebenen Ausführungsbeispiel sind die Arme 28 aus einer metallischen Legierung und vorzugsweise aus Aluminium oder einer Aluminiumlegierung hergestellt. Sie bilden Kühlkörper zur Ableitung von Wärme aus dem Elektromotor 42 und dem Motorsteuereinheit 43. Die Arme 28 haben eine große Oberfläche, so dass die Wärmeabfuhr insbesondere aufgrund der Kühlung während des Fahrens sehr gut ist.

Der Elektromotor 42 ist bevorzugt in etwa mittig zur Längsmittelebene durch das Fahrzeug 10 angeordnet. Zwischen dem Elektromotor und dem Arm 28 der Hinterradschwinge 25, an dem der Stator des Elektromotors 42 befestigt ist, ist ein Antriebsritzel angeordnet, das drehfest mit dem Rotor des Elektromotors 42 verbunden ist.

An dem Hinterrad 14 ist drehfest ein Abtriebsrad in Form einer Riemenscheibe 45 angeordnet. Die Riemenscheibe 45 und das Antriebsritzel 44 sind mittels eines Antriebsriemens 46 miteinander antriebsverbunden. Der Antriebsriemen 46 ist in Figur 1 schematisch veranschaulicht. Beim Ausführungsbeispiel ist der Antriebsriemen 46 als Zahnriemen ausgebildet, so dass ein im Wesentlichen schlupffreier Antrieb des Hinterrads 14 gewährleistet ist. Dementsprechend sind das Antriebsritzel 44 und die Riemenscheibe 45 mit gezahnten Riemenauflageflächen 47 ausgebildet. Das Antriebsritzel 44 und die Riemenscheibe 45, die über den Antriebsriemen 46 gekoppelt sind, bilden ein Riemengetriebe 48 zur Antriebskopplung zwischen dem Elektromotor 42 und dem Hinterrad 14. Anstelle des Riemengetriebes 48 könnten auch andere Getriebe eingesetzt werden, beispielsweise mit Zahnrädern und einer Kette, wie es bei Zweirädern 11 bekannt ist.

Insbesondere aus den Figuren 2 und 3 ist zu erkennen, dass die Riemenscheibe 45 felgenähnlich ausgestaltet ist und einen Ring 49 aufweist, der koaxial zur Nabe 30 des Hinterrades 14 angeordnet ist. An der von der Nabe 30 des Hinterrades 14 abgewandten Außenumfangsfläche weist der Ring 49 die Riemenauflagefläche 47 auf. Der Ring 49 ist über Speichen 50 mit der Nabe 30 bzw. der Achse des Hinterrades 14 verbunden. Die Speichen 50 sind geboren oder abgewinkelt und erstrecken sich zur Drehachse des Hinterrades 14 hin versetzt zum Ring 49, so dass zwischen der Drehachse des Hinterrades 14 und dem Ring 49 benachbart zu den Speichen 50 einen Aufnahmeraum 51 gebildet ist. Der Ring 49 umschließt den Aufnahmeraum 51. In diesem Aufnahmeraum 51 ist eine Bremsscheibe 52 einer Hinterradbremse 53 angeordnet. Die Bremsscheibe 52 kann wärmeleitend mit den Speichen 50 der Riemenscheibe 45 verbunden sein, so dass eine gute Wärmeabfuhr erreicht werden kann. Außerdem ist für die Anordnung aus Riemenscheibe 45 und Hinterradbremse 53 lediglich ein geringer Bauraum in Querrichtung Q erforderlich. Das Anordnen der Riemenscheibe 45 und der Hinterradbremse 53 auf derselben Seite der Nabe 30 hat den Vorteil, dass die Anbindung der Nabe 30 an die Hinterradschwinge 25 auf der der Hinterradbremse 53 entgegengesetzten Seite nicht verändert werden muss, um das Anordnen der Riemenscheibe 45 zu ermöglichen.

Wie es in den Figuren 2-4 zu erkennen ist, können die Arme 28 der Hinterradschwinge 25 an den einander zugewandten Innenseiten Vertiefungen aufweisen, die durch Stege begrenzt sind. Dadurch kann Gewicht eingespart werden und gleichzeitig eine hohe Steifigkeit der Arme 28 erreicht werden, insbesondere eine hohe Biegesteifigkeit und/oder Torsionssteifigkeit.

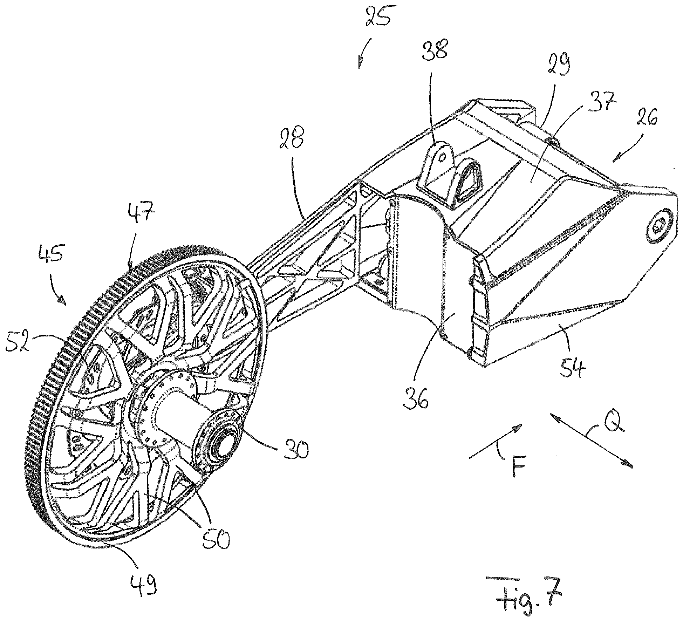

In Figur 7 ist ein abgewandeltes Ausführungsbeispiel der Hinterradschwinge 25 veranschaulicht, die beim Fahrzeug 10 gemäß Figur 1 alternativ zu der Hinterradschwinge gemäß der Figuren 2-6 verwendet werden kann. Der Unterschied des Ausführungsbeispiels der Hinterradschwinge 25 gemäß Figur 7 besteht darin, dass anstelle von zwei Armen 28 lediglich ein einziger Arm 28 vorhanden ist, an dem das Hinterrad 14 gelagert ist. Anstelle des zweiten Arms 28 ist beim Ausführungsbeispiel lediglich eine seitliche Abdeckung 54 seitlich benachbart zum Einbauraum 35 angeordnet. Die seitliche Abdeckung 54 schließt den Einbauraum 35 ab analog zu dem Arm 28, der in Querrichtung Q auf der gegenüberliegenden Seite angeordnet ist. Das Schwenklager 26 ist analog zu den vorherigen Ausführungsbeispielen an den vorderen Enden des Arms 28 und des seitlichen Deckels 54 angeordnet. Der seitliche Deckel 54 kann sozusagen durch einen verkürzten Arm 28 gebildet sein.

Abgesehen von der Ausgestaltung als einarmige Schwinge entspricht das Ausführungsbeispiel der Hinterradschwinge 25 nach Figur 7 dem Ausführungsbeispiel der zweiarmigen Hinterradschwinge 25 gemäß der Figuren 2-6, so dass auf die vorstehende Beschreibung Bezug genommen werden kann.

Die Erfindung betrifft ein Fahrzeug 10 mit einem Hinterrad 14 und wenigstens einem Vorderrad 13, die an einem Rahmen 12 gelagert sind. Der Rahmen 12 hat eine Hinterradschwinge 25 mit einem Arm 28 oder zwei Armen 28. Der wenigstens eine Arm 28 begrenzt seitlich (in einer Querrichtung Q rechtwinklig zur Fahrtrichtung F) einen Einbauraum 35. Im Einbauraum 35 ist ein Elektromotor 42 zum Antrieb des Hinterrades 14 angeordnet. Außerdem ist die Motorsteuereinheit 43 für den Elektromotor 42 im Einbauraum 35 angeordnet. Der wenigstens eine Arm 28 dient als Träger für den Elektromotor 42 und die Motorsteuereinheit 43. Außerdem kann er als Kühlkörper zur Wärmeabfuhr eingerichtet sein.

### Bezugszeichenliste:

- 10: Fahrzeug
- 11: Zweirad
- 12: Rahmen
- 13: Vorderrad
- 14: Hinterrad
- 15: vorderes Rahmenteil
- 16: Steuerrohr
- 17: Lenker
- 18: Federgabel
- 19: Sitz
- 20: Stütze
- 21: Rahmenelement

- 25: Hinterradschwinge
- 26: Schwenklager
- 27: Schwenkzapfen
- 28: Arm
- 29: Wälzlager
- 30: Radnabe

- 35: Einbauraum
- 36: Rückwand
- 37: Deckel
- 38: Lagerteil
- 39: Feder-Dämpfer-Einheit

- 42: Elektromotor
- 43: Motorsteuereinheit
- 44: Antriebsritzel
- 45: Riemenscheibe
- 46: Antriebsriemen
- 47: Riemenauflagefläche
- 48: Riemengetriebe
- 49: Ring
- 50: Speiche
- 51: Aufnahmeraum
- 52: Bremsscheibe
- 53: Hinterradbremse
- 54: seitliche Abdeckung

- F: Fahrtrichtung
- Q: Querrichtung
- S: Schwenkachse

## Patentansprüche

1. Einspuriges Fahrzeug (10) aufweisend:
- wenigstens ein Vorderrad (13) und ein Hinterrad (14),
- einen Rahmen (12) mit einer Hinterradschwinge (25), die wenigstens einen Arm (28) aufweist, wobei das Hinterrad (14) an dem wenigstens einen Arm (28) gelagert ist,
- einen Elektromotor (42), der mit dem Hinterrad (14) antriebsgekoppelt ist, und eine Motorsteuereinheit (43) zur Steuerung des Elektromotors (42), wobei sowohl der Elektromotor (42) als auch die Motorsteuereinheit (43) in einem Einbauraum (35) der Hinterradschwinge (25) angeordnet ist, der durch den wenigstens einen Arm (28) in Querrichtung (Q) rechtwinklig zur Fahrtrichtung (F) begrenzt ist
- einen Deckel (37), der den Einbauraum (35) an einer Oberseite abdeckt, wobei der Deckel (37) ein Lagerteil (38) für eine Feder-Dämpfer-Einheit (39) aufweist.

2. Einspuriges Fahrzeug nach Anspruch 1, wobei die Hinterradschwinge (25) zwei in Querrichtung (Q) rechtwinklig zur Fahrtrichtung (F) mit Abstand zueinander angeordnete Arme (28) aufweist.

3. Einspuriges Fahrzeug nach Anspruch 1 oder 2, wobei der Einbauraum (35) in Querrichtung (Q) auf der einen Seite durch den wenigstens einen Arm (28) und auf der anderen Seite durch einen weiteren Arm (28) oder eine Abdeckung abgeschlossen ist.

4. Einspuriges Fahrzeug nach einem der vorhergehenden Ansprüche, wobei die Hinterradschwinge (25) mittels eines Schwenklagers (26) schwenkbar an einem vorderen Rahmenteil (15) des Rahmens (12) gelagert ist.

5. Einspuriges Fahrzeug nach Anspruch 4, wobei der Einbauraum (35) mit Bezug zur Fahrtrichtung (F) vor dem Hinterrad (14) und hinter dem Schwenklager (26) angeordnet ist.

6. Einspuriges Fahrzeug nach einem der vorhergehenden Ansprüche, wobei der Elektromotor (42) über eine wärmeleitende Verbindung mit wenigstens einem Arm (28) der Hinterradschwinge (25) verbunden ist.

7. Einspuriges Fahrzeug nach einem der vorhergehenden Ansprüche, wobei die Motorsteuereinheit (43) über eine wärmeleitende Verbindung mit wenigstens einem Arm (28) der Hinterradschwinge (25) verbunden ist.

8. Einspuriges Fahrzeug nach einem der vorhergehenden Ansprüche, wobei die Motorsteuereinheit (43) dem Elektromotor (42) in Querrichtung (Q) gegenüberliegend angeordnet ist.

9. Einspuriges Fahrzeug nach einem der vorhergehenden Ansprüche, wobei der Einbauraum (35) an einer Rückseite zum Hinterrad (14) hin durch eine Rückwand (36) zumindest teilweise geschlossen ist.

10. Einspuriges Fahrzeug nach einem der vorhergehenden Ansprüche, wobei wenigstens ein Arm (28) der Hinterradschwinge (25) aus Metall oder einer metallischen Legierung besteht.

11. Einspuriges Fahrzeug nach einem der vorhergehenden Ansprüche, wobei der Elektromotor (42) und das Hinterrad (14) über ein Riemengetriebe (48) antriebsgekoppelt sind.

12. Einspuriges Fahrzeug nach Anspruch 11, wobei das Riemengetriebe (48) eine Riemenscheibe (45) am Hinterrad (14) aufweist, deren Riemenauflagefläche (47) einen Aufnahmeraum (51) für eine Bremsscheibe (52) umschließt.

13. Einspuriges Fahrzeug nach einem der vorhergehenden Ansprüche, wobei das Hinterrad (14) einen kleineren Durchmesser aufweist als das wenigstens eine Vorderrad (13) .

## Claims

1. One track vehicle (10) comprising:
- at least one front wheel (13) and one rear wheel (14),
- a frame (12) having a rear swing arm (25) comprising at least one arm (28), wherein the rear wheel (14) is supported on the at least one arm (28),
- an electric motor (42), which is drivingly coupled with the rear wheel (14) and a motor control unit (43) for controlling the electric motor (42), wherein the electric motor (42) as well as the motor control unit (43) are arranged in an installation space (35) of the rear swing arm (25), which is limited in transverse direction (Q) orthogonal to the driving direction (F) by the at least one arm (28),
- a cover (37) that covers the installation space (35) on a top side,
**characterized in that** the cover (37) comprises a support part (38) for a spring-damper-unit (39).

2. One track vehicle according to claim 1, wherein the rear swing arm (25) comprises two arms (28) arranged with distance to one another in transverse direction (Q) orthogonal to the driving direction (F).

3. One track vehicle according to claim 1 or 2, wherein the installation space (35) is closed in transverse direction (Q) on one side by the at least one arm (28) and on the other side by an additional arm (28) or a cover.

4. One track vehicle according to any of the preceding claims, wherein the rear swing arm (25) is pivotably supported by means of a pivot bearing (26) on a front frame part (15) of frame (12).

5. One track vehicle according to claim 4, wherein the installation space (35) is arranged in front of the rear wheel (14) and behind the pivot bearing (26) in relation to the driving direction (F).

6. One track vehicle according to any of the preceding claims, wherein the electric motor (42) is connected with the at least one arm (28) of rear swing arm (25) via a heat conducting connection.

7. One track vehicle according to any of the preceding claims, wherein the motor control unit (43) is connected with the at least one arm (28) of rear swing arm (25) via a heat conducting connection.

8. One track vehicle according to any of the preceding claims, wherein the motor control unit (43) is arranged opposite the electric motor (42) in transverse direction (Q) .

9. One track vehicle according to any of the preceding claims, wherein the installation space (35) is at least partly closed on a rear side toward the rear wheel (14) by means of a back wall (36).

10. One track vehicle according to any of the preceding claims, wherein the at least one arm (28) of rear swing arm (25) consists of metal or a metallic alloy.

11. One track vehicle according to any of the preceding claims, wherein the electric motor (42) and the rear wheel (14) are drivingly coupled by means of a belt transmission (48).

12. One track vehicle according to claim 11, wherein the belt transmission (48) comprises a belt pulley (45) on the rear wheel (14), a belt contact surface (47) of which surrounds a location space (51) for a break disc (52) .

13. One track vehicle according to any of the preceding claims, wherein the rear wheel (14) has a smaller diameter than the at least one front wheel (13).

## Revendications

1. Véhicule à voie unique (10) présentant :
- au moins une roue avant (13) et une roue arrière (14),
- un cadre (12) doté d'un bras oscillant de roue arrière (25) qui présente au moins un bras (28), la roue arrière (14) étant montée sur le bras (28), au nombre d'au moins un,
- un moteur électrique (42), qui est couplé du point de vue de l'entraînement à la roue arrière (14), et une unité de commande de moteur (43) destinée à commander le moteur électrique (42), sachant qu'aussi bien le moteur électrique (42) que l'unité de commande de moteur (43) sont disposés dans un espace de montage (34) du bras oscillant de roue arrière (25), qui est délimité par le bras (28), au nombre d'au moins un, dans la direction transversale (Q) perpendiculaire à la direction de déplacement (F),
- un couvercle (37) qui recouvre l'espace de montage (35) sur une face supérieure, **caractérisé en ce que** le couvercle (37) présente une pièce de support (38) pour un ensemble ressort-amortisseur (39).

2. Véhicule à voie unique selon la revendication 1, dans lequel le bras oscillant de roue arrière (25) présente deux bras (28) disposés à distance l'un de l'autre dans la direction transversale (Q) perpendiculaire à la direction de déplacement (F).

3. Véhicule à voie unique selon la revendication 1 ou 2, dans lequel l'espace de montage (35) est fermé dans la direction transversale (Q), sur un côté par le bras (28), au nombre d'au moins un, et sur l'autre côté par un autre bras (28) ou un moyen de recouvrement.

4. Véhicule à voie unique selon l'une des revendications précédentes, dans lequel le bras oscillant de roue arrière (25) est monté à l'aide d'un palier pivotant (26) avec possibilité de pivotement sur une partie de cadre avant (15) du cadre (12).

5. Véhicule à voie unique selon la revendication 4, dans lequel l'espace de montage (35), rapporté à la direction de déplacement (F), est disposé devant la roue arrière (14) et derrière le palier pivotant (26).

6. Véhicule à voie unique selon l'une des revendications précédentes, dans lequel le moteur électrique (42) est relié par une liaison conductrice de chaleur à au moins un bras (28) du bras oscillant de roue arrière (25).

7. Véhicule à voie unique selon l'une des revendications précédentes, dans lequel l'unité de commande de moteur (43) est reliée par une liaison conductrice de chaleur à au moins un bras (28) du bras oscillant de roue arrière (25).

8. Véhicule à voie unique selon l'une des revendications précédentes, dans lequel l'unité de commande de moteur (43) est disposée en vis-à-vis du moteur électrique (42), dans la direction transversale (Q).

9. Véhicule à voie unique selon l'une des revendications précédentes, dans lequel l'espace de montage (35) est fermé au moins partiellement par une paroi arrière (36) sur une face arrière côté roue arrière (14).

10. Véhicule à voie unique selon l'une des revendications précédentes, dans lequel au moins un bras (28) du bras oscillant de roue arrière (25) est en métal ou en un alliage métallique.

11. Véhicule à voie unique selon l'une des revendications précédentes, dans lequel le moteur électrique (42) et la roue arrière (14) sont couplés du point de vue de l'entraînement par un mécanisme de transmission à courroie (48).

12. Véhicule à voie unique selon la revendication 11, dans lequel le mécanisme de transmission à courroie (48) présente sur la roue arrière (14) une poulie de courroie (45) dont la surface d'appui de courroie (47) renferme un logement (51) pour un disque de frein (52).

13. Véhicule à voie unique selon l'une des revendications précédentes, dans lequel la roue arrière (14) présente un diamètre qui est inférieur à celui de la roue avant (13), au nombre d'au moins une.
